# EUROPÄISCHE PATENTSCHRIFT

(11) **EP 3 802 206 B1**
(45) Veröffentlichungstag und Bekanntmachung des Hinweises auf die Patenterteilung: **03.09.2025**
(21) Anmeldenummer: 19732889.1
(22) Anmeldetag: 11.06.2019
(51) Int. Cl.: B60N 2/809

(54) **LAGERVORRICHTUNG UND KOPFSTÜTZE**
MOUNTING DEVICE AND HEADREST
DISPOSITIF DE PALIER ET APPUIE-TÊTE

(30) Priorität: 11.06.2018 DE 102018113856
(43) Veröffentlichungstag der Anmeldung: 14.04.2021
(73) Patentinhaber: GRAMMER AG, 92289 Ursensollen (DE)
(72) Erfinder: BÖSL, Manuel, 92272 Freudenberg (DE)
(74) Vertreter: Roche, von Westernhagen & Ehresmann
(86) Internationale Anmeldenummer: PCT/DE2019/100531
(87) Internationale Veröffentlichungsnummer: WO 2019/238171

(56) Entgegenhaltungen:
- EP-A1- 2 062 774
- EP-A1- 3 045 347
- DE-B4- 102005 019 946

## Beschreibung

Die Erfindung betrifft zunächst eine Lagervorrichtung für eine Kopfstütze eines Fahrzeugsitzes. Ein solches Lagerelement ist aus der DE 10 2015 000 108 A1 bekannt. Die Kopfstütze umfasst ein Kopfanlageteil zum Abstützen des Kopfes eines in dem Fahrzeugsitz befindlichen Sitzinsassen. Das Kopfanlageteil ist mit wenigstens einer Tragstange an einer Fahrzeugstruktur gehalten, wobei die Fahrzeugstruktur z.B. von der Rückenlehne des Fahrzeugsitzes gebildet sein kann. Das Kopfanlageteil ist mit wenigstens einer Lagervorrichtung an der Tragstange gehalten und die Tragstange ist mit wenigstens einer Lagervorrichtung an der Fahrzeugstruktur gelagert.

In der DE 10 2011 100 819 B4 ist ein Kraftfahrzeugsitz mit einer Kopfstütze offenbart. Die Haltestangen der Kopfstütze sind hier in einem Lagerrahmen gelagert, der Lagerelemente aufweist. Anlagebereiche der Lagerelemente sind gegenüberliegend ausgebildet und wenigstens eines der Lagerelemente ist flexibel ausgebildet, um einen Kraftschluss mit der Haltestange herzustellen. Die Lagerelemente sind einem Lagerrahmen zugeordnet.

In der DE 10 2005 019 946 B4 ist eine Befestigungsvorrichtung für die Kopfstütze eines Fahrzeugsitzes beschrieben. Die Kopfstützenstangen sind in Führungshülsen gelagert, die jeweils in einer Aufnahmeeinrichtung des Fahrzeugsitzes gehalten sind. In den Führungshülsen sind elastische Federlaschen ausgebildet, welche die Kopfstützenstangen gegen Innenflächen der Führungshülsen drücken. Auf der Führungshülse ist ein Federelement angebracht, das sich an der Führungshülse abstützt und eine Klemmkraft auf die Kopfstützenstange ausübt.

Die DE 196 08 851 C2 betrifft eine Führungshülse, bei welcher ebenfalls ein Federelement auf eine federnde Zunge der Führungshülse eine radiale Kraft ausübt, so dass die Zunge gegen die Tragstange belastet wird.

In der DE 10 2005 043 811 B4 ist eine Kopfstütze beschrieben, deren Tragstange in einer Führungsstruktur der Rückenlehne gelagert ist. Die Führungsstruktur hält wenigstens ein Lagerelement, welches eine zur Tragstange hin vorragende Lagerfläche bildet.

Die DE 10 2010 041 878 A1 beschreibt eine Kopfstütze, wobei eine Tragstange der Kopfstütze mit Lagerelementen gelagert ist, die an einem Polsterträger der Kopfstütze gehalten und elastisch in Richtung der Tragstange vorgespannt sind. Die Vorspannung wird durch eine Bügelfeder erzeugt, welche sich an einer Außenseite des polsterträgerfesten Lagerelements abstützt und die freien Enden radial einwärts drückt. Die Lagerelemente weisen an einem inneren Umfang Führungsstege auf, die zur Tragstange hin vorragen.

Die DE 10 2015 000 108 A1 betrifft eine Lagervorrichtung für eine Kopfstützentragstange mit einem Rahmen, der eine Öffnung ausbildet, die von der Tragstange durchgriffen werden kann. Die Lagervorrichtung weist wenigstens einen Kontaktbereich zur Anlage an der Außenfläche der Tragstange auf, der mit einem Verbindungselement mit einem Haltebereich verbunden ist, welcher an dem Rahmen ausgebildet ist.

Es ist Aufgabe der Erfindung, eine Lagervorrichtung zu schaffen, welche Toleranzen in der Form der Tragstange und dem Abstand von zwei Tragstangenenden zueinander ausgleichen kann, wobei die Kopfstütze dennoch klapperfrei in der Lagervorrichtung gehalten ist.

Die Aufgabe wird zunächst gelöst durch eine Lagervorrichtung mit den Merkmalen des Anspruchs 1.

Die Lagervorrichtung ist zur Lagerung der Tragstange einer Kopfstütze für Fahrzeugsitze vorgesehen. Die Lagervorrichtung umfasst wenigstens einen Rahmen, welcher eine Öffnung ausbildet, die von einer Tragstange durchgriffen werden kann und wenigstens einen Kontaktbereich, welcher zur Anlage an der Außenfläche der Tragstange vorgesehen ist. Insbesondere weist die Lagervorrichtung wenigstens zwei Kontaktbereiche auf. Es können z.B. zwei, drei oder vier Kontaktbereiche vorgesehen sein. Die Kontaktbereiche können z.B. gleichmäßig über den Umfang der Tragstange verteilt angeordnet sein. Gemäß einer Ausführungsform ist wenigstens ein erster Kontaktbereich mechanisch unabhängig von mindestens einem zweiten Kontaktbereich gelagert und lässt sich in radialer Richtung bewegen.

Die Rahmen weist eine Öffnung mit einer Innenfläche auf. Die Innenfläche bildet einen Anschlag für die Außenfläche der Tragstange aus.

Die von einem Kontaktbereich auf die Tragstange ausgeübte Kraft wird z.B. von wenigstens einem anderen Kontaktbereich, der ein Widerlager bildet, wenigstens teilweise aufgenommen. Auf diese Weise ist die Tragstange schwimmend mit der Lagervorrichtung gelagert.

Die Lagervorrichtung kann z.B. sitzfest oder kopfanlageteilfest ausgebildet sein. Die Lagervorrichtung kann z.B. von einer Lagerhülse oder einer den Umfang der Tragstange wenigstens teilweise umgreifenden Struktur ausgebildet sein, die mit der Rückenlehne oder mit dem Kopfanlageteil verbunden ist. "Verbunden" kann in diesem Sinne z.B. "daran befestigt" oder "einstückig damit ausgebildet" bedeuten. Die Lagervorrichtung kann z.B. derart ausgebildet sein, dass sie Kräfte, die in Richtung von wenigstens zwei Raumachsen wirken, aufnehmen kann.

Der Kontaktbereich ist einem Verbindungselement zugeordnet. Das Verbindungselement ist mit einem Haltebereich der Führungsstruktur verbunden. Das bedeutet im Sinne der Erfindung, dass mittels des Verbindungselements Zug- und / oder Druckkräfte zwischen dem Kontaktbereich und der Führungsstruktur übertragen werden können. Der Haltebereich ist z.B. benachbart zu einer Innenfläche der Öffnung ausgebildet. Der Haltebereich kann unmittelbar von der Führungsstruktur oder von einem gesonderten Element ausgebildet sein.

Das Verbindungselement ist z.B. elastisch und radial bewegbar ausgebildet. Auf diese Weise lässt sich der Kontaktbereich zur Tragstange und von der Tragstange wegbewegen. Die Elastizität kann von der Form und dem Material des Verbindungselements abhängen. Gemäß einer alternativen Ausführung oder zusätzlich ist das Verbindungselement bewegbar an dem Haltebereich gelagert. In diesem Fall kann es z.B. von einer Feder radial in die Öffnung belastet werden.

Die Innenfläche der Öffnung ist z.B. einer ersten Ebene und der wenigstens eine Kontaktbereich einer zweiten Ebene zugeordnet, wobei die zweite Ebene zu der ersten Ebene z.B. einen Abstand aufweisen kann. Die zweite Ebene ist z.B. parallel zu der ersten Ebene.

Auf diese Weise ist das Kopfanlageteil schwimmend an der Tragstange lagerbar, d.h. es ist im Spielraum der Öffnung relativ zu der Tragstange bewegbar und in die Ausgangslage belastet. Die Innenfläche der Öffnung bildet einen Anschlag für die Außenfläche der Tragstange, welche die Bewegbarkeit des Kopfanlageteils relativ zu der Tragstange begrenzt.

Das Verbindungselement ist z.B. von einem Arm gebildet, welchem der Kontaktbereich zugeordnet ist. Der Arm erstreckt sich z.B. von dem Haltebereich an der Lagervorrichtung in Richtung einer Längsmittelachse der Öffnung. Der Arm kann sich z.B. alternativ oder zusätzlich in Umfangsrichtung, um die Öffnung erstrecken. Der Arm erstreckt sich dann auch um wenigstens einen Teil des Außenumfangs der Tragstange, welche die Öffnung durchgreift. Der Arm ist z.B. fest mit dem Kontaktbereich verbunden. Insbesondere ist der Kontaktbereich Teil des Arms, also einstückig mit diesem ausgebildet. Der Arm ist z.B. mit dem Haltebereich fest verbunden. Insbesondere ist der Arm an der Lagervorrichtung, insbesondere an einem von der Lagervorrichtung gebildeten Rahmen angeformt.

Der Arm ist gemäß einer Ausführungsform elastisch verformbar ausgebildet. Auf diese Weise ist er radial beweglich und kann zur Tragstange hin und von der Tragstange wegbewegt werden. Wenn sich eine Tragstange in der Lagervorrichtung befindet ist der Arm z.B. aufgrund einer Übermaßpassung zwischen der Außenfläche der Tragstange und dem Kontaktbereich elastisch radial aus seiner Ruheposition verdrängt und übt eine Vorspannkraft gegen den Kontaktbereich aus, so dass der Kontaktbereich in Anlage an die Außenfläche belastet ist. Gemäß einer Alternative oder zusätzlich ist der Arm z.B. bewegbar an dem Haltebereich gelagert und von einer Feder radial in die Öffnung belastet.

Gemäß einer Ausführungsform wirkt eine Feder unmittelbar oder mittelbar auf den Kontaktbereich und belastet den Kontaktbereich gegen die Außenfläche der Tragstange. Die Federkraft der Feder kann z.B. auf das Verbindungselement wirken. Die Feder übt z.B. eine Kraft auf mehrere Kontaktbereiche aus, und belastet diese gegen die Tragstange. Alle Kontaktbereiche sind z.B. von der Feder gleichmäßig belastet. Die Feder kann z.B. die elastische Rückstellkraft des Verbindungselements unterstützen. Die Federkraft der Feder wirkt z.B. in dieselbe Richtung wie die elastische Rückstellkraft des Verbindungselements.

Die Anlagefläche der Feder an dem Kontaktbereich und /oder dem Verbindungselement ist z.B. als Rampe ausgebildet. Damit kann eine erhöhte Federkraft auf den Kontaktbereich oder bestimmte Bereiche des Verbindungselements ausgeübt werden.

Als Material für die Feder kommen alle geeigneten Materialien, wie z.B. Silikon, Metall, Kunststoff in Betracht. Auch unterschiedliche Formen, wie z.B. Schraubenfeder, einfacher Ring, sind möglich.

Die Federlänge wirkt sich auf die Federkennlinie aus. Mit einer großen Federlänge kann z.B. eine flache Federkennlinie, d.h. ein geringes Verhältnis von Federkraft zu Federweg, erzielt werden. Der Einfluss auf die Normalkraft, die auf die Haltestange wirkt, ist dann bei unterschiedlichen Toleranzen und Temperaturen gering. Die Verstellkräfte bleiben etwa konstant.

Einer weiteren Ausgestaltung der Erfindung gemäß ist die Feder als Ringfeder ausgebildet. Ringfeder bedeutet im Sinne der Erfindung, dass die Feder als geschlossener Ring oder als offener Ring ausgebildet ist, welcher die Öffnung bzw. den Umfang der Tragstange wenigstens teilweise umschließt. Die Ringfeder übt z.B. eine gleichmäßig über den Umfang verteilte Kraft auf die Kontaktbereiche auf. Die Ringfeder stützt sich z.B. nicht an der Fahrzeugstruktur ab, sondern lediglich an der Tragstange. Gemäß einer alternativen Ausführungsform stützt sich das Ringelement wenigstens teilweise an der Fahrzeugstruktur ab. Eine Verbindung der Kontaktbereiche erfolgt z.B. über die Ringfeder. Mittels der Ringfeder kann die Bewegung der Kontaktbereiche z.B. miteinander gekoppelt werden. Kräfte, die auf einen Kontaktbereich wirken, können mittels der Ringfeder auf andere Kontaktbereiche übertragen werden.

Gemäß einer Ausgestaltung der Erfindung umgreift die Ringfeder den Kontaktbereich und / oder das Verbindungselement wenigstens teilweise. Z.B. umgreift die Ringfeder alle Kontaktbereiche und / oder alle Verbindungselemente. Der Kontaktbereich oder das Verbindungselement mit dem Kontaktbereich kann z.B. von der Ringfeder in Kontakt mit der Außenfläche der Tragstange belastet werden. Wenn das Verbindungselement als Arm ausgebildet ist, der sich in Umfangsrichtung um die Öffnung erstreckt, kann die Feder über die gesamte Länge an dem Arm anliegen und den Arm radial in Richtung der Öffnung bzw. der Tragstange belasten.

Einer weiteren Ausgestaltung der Erfindung gemäß heben sich die von den Kontaktbereichen auf die Außenfläche der Tragstange ausgeübten Kräfte auf. Das ist z.B. dann möglich, wenn wenigstens zwei Kontaktbereiche um 180° versetzt oder wenigstens drei Kontaktbereiche um 120° versetzt am Außenumfang anliegen und die von den Kontaktbereichen auf die Außenfläche der Tragstange ausgeübten Kräfte gleich groß sind und so gerichtet sind, dass sie sich aufheben. Gemäß einer weiteren Ausgestaltung der Erfindung belastet die Ringfeder wenigstens zwei Kontaktbereiche derart, dass die Tragstange innerhalb der Öffnung zentriert wird.

Eine Ausgestaltung der Erfindung ist dadurch gekennzeichnet, dass der Rahmen Teil einer Führungsstruktur ist, z.B. an die Führungsstruktur angeformt ist. Gemäß einer alternativen Ausführung ist der Rahmen an der Führungsstruktur befestigt. Z.b. ist der Rahmen als Einsatz ausgebildet ist, welcher an der Führungsstruktur befestigbar ist.

Der Rahmen kann z.B. plattenförmig ausgebildet sein. D.h., dass seine Dicke im Verhältnis zu seiner Länge und Breite gering ist.

Die Platte bildet z.B. die erste Ebene, wobei das wenigstens ein Verbindungselement derart an der Platte angeformt ist, dass der mindestens eine Kontaktbereich eine zweite Ebene bildet.

Der Rahmen ist z.B. mit dem wenigstens einen Verbindungselement einteilig ausgebildet.

Der Einsatz kann z.B. in einem Sitz der Führungsstruktur befestigbar, insbesondere verrastbar, sein. Der Einsatz kann z.B. in Form einer Kassette ausgebildet sein, die in dem Sitz der Führungsstruktur befestigt werden kann. Das Ringelement kann auf diese Weise einfach montiert werden.

Die Erfindung betrifft gemäß einem zweiten Aspekt eine Kopfstütze mit einem Kopfanlageteil, welches mittels wenigstens einer Tragstange an der Fahrzeugstruktur, insbesondere der Rückenlehne eines Fahrzeugsitzes, gehalten ist. Tragstange ist im Sinne der Erfindung auch das freie Ende eines Tragstangenbügels. Die Kopfstütze weist Lager auf, mit denen das Kopfanlagteil auf der Tragstange gelagert ist. Die Lagerung kann z.B. eine Höhenverstellung des Kopfanlageteils ermöglichen, also eine Relativbewegung zwischen Kopfanlageteil und Tragstange. Des Weiteren ist die Tragstange in einem Lager gehalten, welches fest an der Fahrzeugstruktur befestigt ist.

Es war Aufgabe der Erfindung, eine Kopfstütze zu schaffen, bei welcher das Kopfanlageteil auch bei Abweichungen der Maße der Tragstangen sowie bei einer Abweichung des Abstandes von ggf. zwei Tragstangen funktionssicher und klapperfrei gelagert ist. Die Aufgabe wurde gelöst durch eine Kopfstütze mit den Merkmalen des Anspruchs 11.

Die Kopfstütze weist die Besonderheit auf, dass das Kopfanlageteil mit wenigstens einer oben beschriebenen Lagervorrichtung gelagert ist. Um Wiederholungen zu vermeiden wird bezüglich der Vorteile der Erfindung auf die Ausführungen verwiesen, die zu der erfindungsgemäßen Lagervorrichtung gemacht wurden.

Weitere Vorteile der Erfindung ergeben sich anhand der Beschreibung eines in den Fig. dargestellten Ausführungsbeispiels. In den schematischen Fig. zeigen:
Fig. 1 eine Hinteransicht einer Kopfstütze, wobei eine hintere Schale des Kopfanlageteils nicht dargestellt ist.
Fig. 2 eine perspektivische Darstellung der Lagervorrichtung,
Fig. 3 eine Draufsicht auf die Lagervorrichtung,
Fig. 4 eine Schnittdarstellung gemäß Schnittlinie IV - IV in Fig. 3,
Fig. 5 eine Seitenansicht gemäß Ansichtspfeil V in Fig. 3,
Fig. 6, eine Schnittdarstellung gemäß Schnittlinie VI - VI in Fig. 5,
Fig. 7 eine Schnittdarstellung gemäß Schnittlinie VII - VII in Fig. 5,
Fig. 8 eine Schnittdarstellung in Anlehnung an Fig. 6, wobei eine Tragstange in der Lageraufnahme dargestellt ist,
Fig. 9 eine Schnittdarstellung in Anlehnung an Fig. 7, wobei eine Tragstange in der Lageraufnahme dargestellt ist,
Fig. 10 eine Hinteransicht einer zweiten Ausführungsform der Kopfstütze.

Die erfindungsgemäße Lagervorrichtung insgesamt wird in den Zeichnungen mit dem Bezugszeichen 10 bezeichnet. Gleiche Bezugszeichen in den unterschiedlichen Fig. bezeichnen, auch wenn kleine Buchstaben nachgestellt oder weggelassen sind, entsprechende Teile.

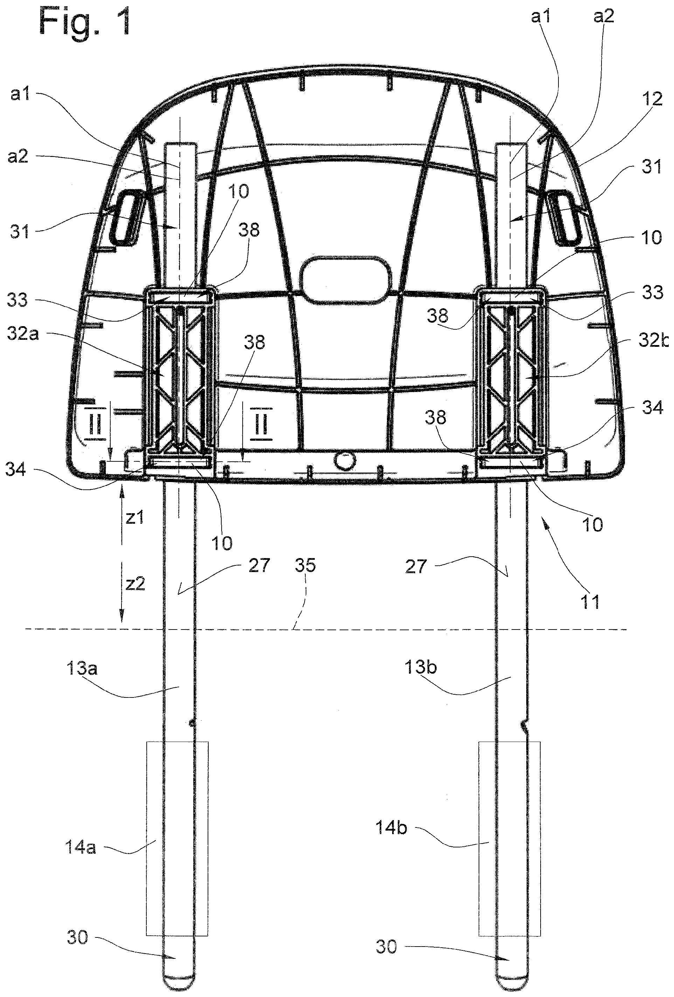

Die Lagervorrichtung 10 ist zur Lagerung eines in Fig. 1 dargestellten Kopfanlageteils 12 einer Kopfstütze 11 vorgesehen. In Fig. 1 ist eine hintere Ansicht der Kopfstütze 11 gezeigt. Die Kopfstütze 11 umfasst das Kopfanlageteil 12 sowie Tragstangen 13a und 13b. Mittels der Tragstangen 13a und 13b ist das Kopfanlageteil 12 an der Rückenlehne 35 eines nicht näher dargestellten Fahrzeugsitzes gelagert. In Fig. 1 ist eine hintere Halbschale des zwei Halbschalen aufweisenden Kopfanlageteils 12 nicht gezeigt. Das Kopfanlageteil 12 kann z.B. relativ zu den Tragstangen 13a und 13b in Richtung z1 und z2 verstellt werden.

Ein Endbereich 30 der Tragstange 13a greift in ein Lager 14a und ein Endbereich 30 der Tragstange 13b greift in ein Lager 14b. Jedes Lager 14a und 14b ist an der Struktur der Rückenlehne 35 befestigt. Die Endbereiche 30 der Tragstangen 13a und 13b sind in dem jeweiligen Lager 14a und 14b befestigt, z.B. lösbar verrastet. Die Lager 14a und 14b sind z.B. als Hülsen ausgebildet.

Ein oberer Endbereich 31 der Tragstange 13a ist in einer Führungsstruktur 32a des Kopfanlageteils 12 gelagert und ein oberer Endbereich 31 der Tragstange 13b ist in einer Führungsstruktur 32b des Kopfanlageteils 12 gelagert. Jede Führungsstruktur 32a und 32b ist fest mit dem Kopfanlageteil 12 verbunden und umfasst einen oberen Lagersitz 33 sowie einen unteren Lagersitz 34, in welchem ein Einsatz 38 mit der Lagervorrichtung 10 befestigt ist.

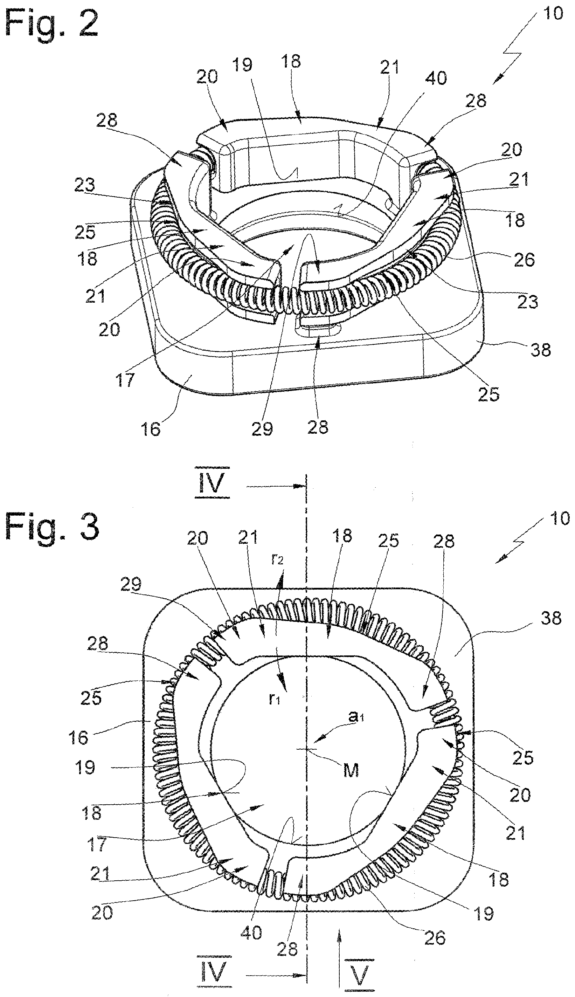

Eine perspektivische Ansicht des Einsatzes 38 ist in Fig. 2 dargestellt. Der Einsatz 38 umfasst einen z.B. plattenförmigen Rahmen 16, welcher eine Öffnung 17 ausbildet, in welcher die Tragstange 13a bzw. die Tragstange 13b angeordnet werden kann. Der Rahmen 16 umschließt die Öffnung 17 vollständig und bildet eine der Öffnung 17 zugewandte Laibung 22 mit einer Innenfläche 40 aus. Die Laibung 22 weist einen Innendurchmesser d auf und ist in einer ersten Ebene E1 angeordnet.

Die Lagervorrichtung 10 ist mit drei elastisch verformbaren Armen 21 versehen, die jeweils einen Kontaktbereich 18 mit einer Kontaktfläche 19 zur Kontaktierung der Tragstange aufweisen. Die Anzahl der Arme 21 kann bei alternativen Ausführungen variieren. Der Kontaktbereich 18 ist an einem freien Endbereich 20 des Arms 21 angeordnet.

An einem Haltebereich 28 ist jeder Arm 21 mit dem Rahmen 16 verbunden. Im vorliegenden Ausführungsbeispiel ist der Arm 16 einstückig mit dem Rahmen 16 ausgebildet. Jeder Arm 21 erstreckt sich von dem Haltebereich 28 in Umfangsrichtung u um einen Mittelpunkt M bzw. um die Längsmittelachse a1 der Öffnung 17. Darüber hinaus erstreckt sich jeder Arm 21 radial in Richtung r1 zu dem Mittelpunkt M. Die Arme 21 sind unabhängig voneinander an dem Rahmen 16 gelagert und die freien Endbereiche 20 lassen sich unabhängig voneinander radial in die Richtungen r1 und r2 bewegen. Der Arm 21 kann auf diese Weise bzgl. der Längsmittelachse a1 radial nach außen und nach innen in die Richtungen r2 und r1 federn.

Die Haltebereiche 28 der Arme 21 sind an einer Fläche 29 des plattenförmigen Rahmens 16 der Lagervorrichtung 10 angeformt. Die Arme 21 erstrecken sich in einer zweiten Ebene E2, die z.B. parallel zu der Ebene E1 angeordnet ist und z.B. einen Abstand I zu der Ebene E1 aufweist. Die Kontaktbereiche 18 sind damit in Bezug auf die Längsmittelachse a2 der Tragstange von der Innenfläche 40 beabstandet. Die Innenfläche 40 definiert daher das radiale Spiel der Tragstange innerhalb der Öffnung 17.

Auf einer Seite 23 des Arms 21 ist eine Aussparung 24 ausgebildet, die sich in Umfangsrichtung u um den Mittelpunkt M erstreckt.

Bei axialer Betrachtung in Bezug auf die Längsmittelachse a1 gemäß Fig. 3 ist erkennbar, dass die Arme 21 Sekanten der Öffnung 17 bilden. Es wird deutlich, dass der Einsatz 38 drei Arme 21 aufweist, die jeweils etwa 120° der Öffnung 17 umspannen und an ihren Endbereichen 20 den Kontaktbereich 18 ausbilden. Die Kontaktbereiche 18 sind um 120° zueinander versetzt angeordnet.

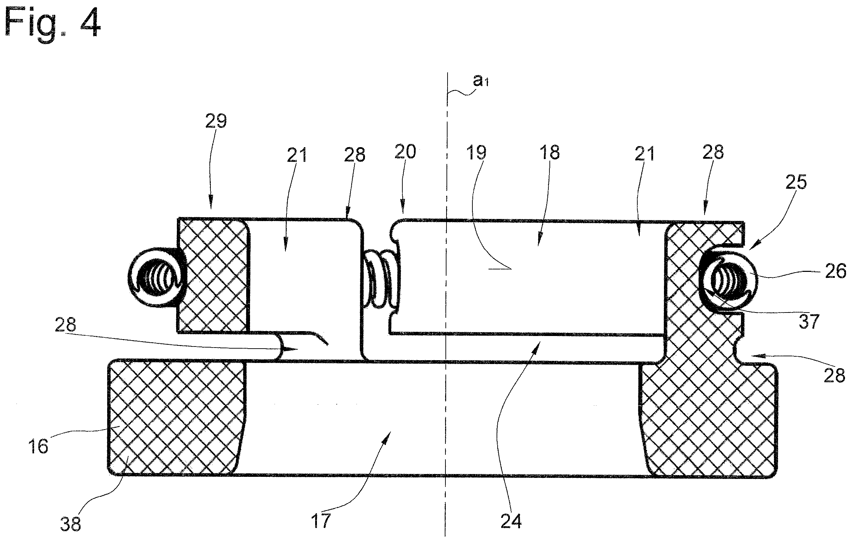

In den Fig. 3 und 4 ist zu erkennen, dass die Längsmittelachse a1 der Führungsstruktur 14a durch den Mittelpunkt M der kreisförmigen Öffnung 17 verläuft. Es ist zu erkennen, dass der Einsatz 38 sich in der Ebene E1 quer zu der Längsmittelachse a2 der Tragstange 13a erstreckt, also einen rechten Winkel mit Längsmittelachse a2 bildet. Auch die Ebene E2, in welcher sich die Arme 21 erstrecken, bildet etwa einen rechten Winkel mit der Längsmittelachse a2.

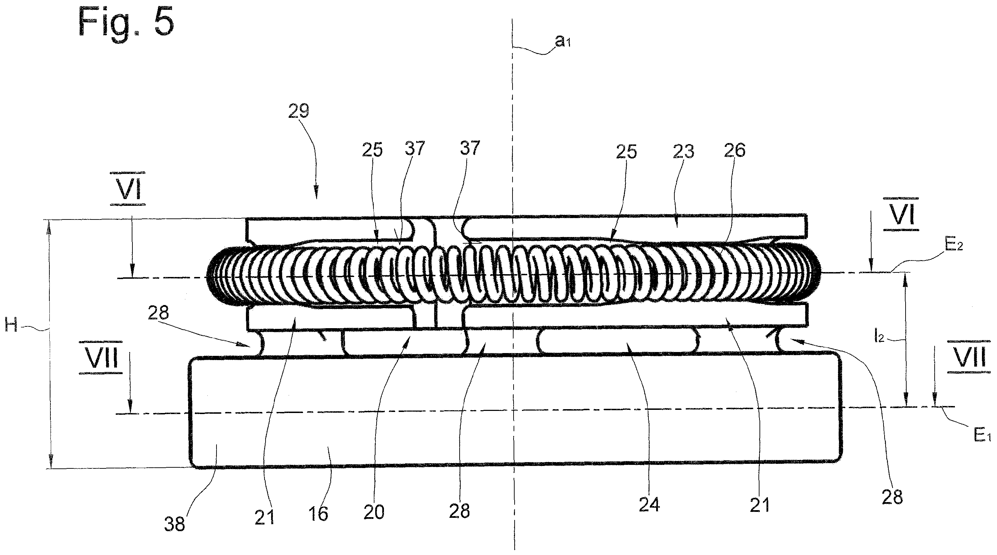

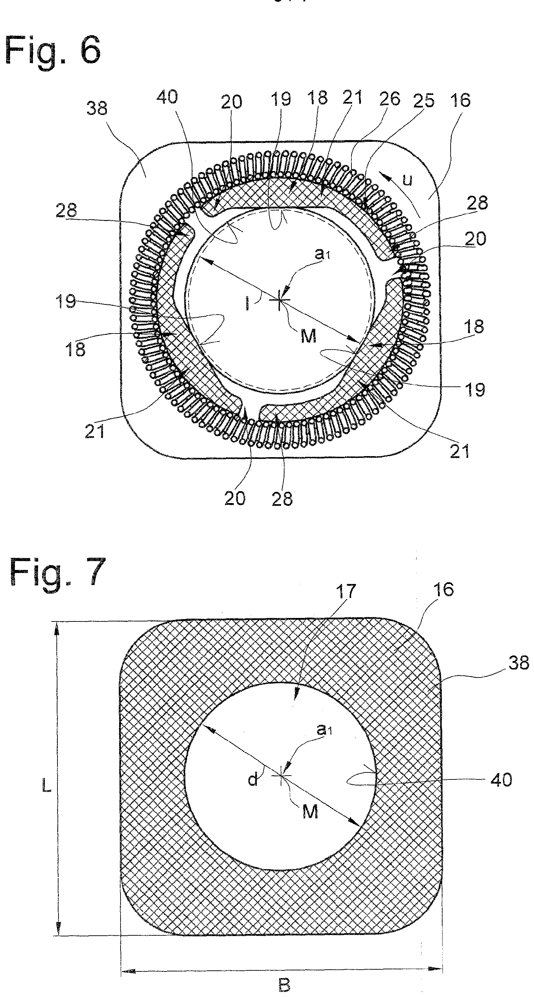

In Fig. 5 ist die Höhe H des Einsatzes 38 dargestellt, die im Verhältnis zur Länge L und Breite B (siehe Fig. 7) klein ist.

Jeder Arm 21 weist bzgl. der Längsmittelachse a1 auf einer Außenseite 41 eine Aussparung 24 auf, die einen Montagesitz bildet (siehe z.B. Fig. 5). An der Außenseite 41 des Arms 21 wird von der Aussparung 24 eine Anlagefläche 37 gebildet. Die Anlagefläche 37 hat die Form eines Kreisbogenabschnitts.

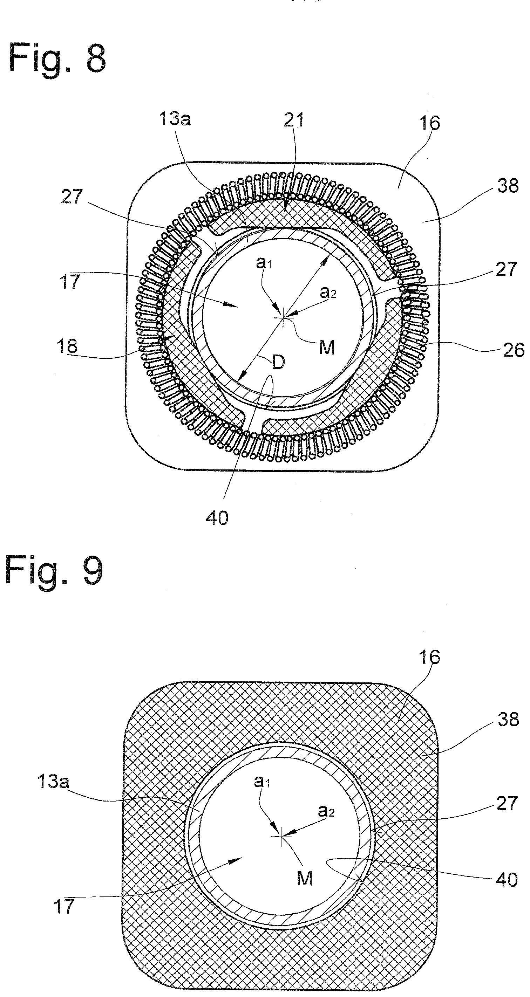

In dem Montagesitz 25 ist eine ringförmige Feder 26 angeordnet. Die Feder 26 ist z.B. von einer Schraubenfeder gebildet, deren Enden aneinander befestigt sind. Alternativ kann die Feder 26 aber z.B. auch von einem Silikonring oder anderen geeigneten Federn gebildet sein. Die Feder 26 liegt etwa über die gesamte Längserstreckung des Arms 21 an der Anlagefläche 37 an und übt eine radiale Kraft auf die Anlagefläche 37 in Richtung r1 aus und belastet damit alle Kontaktflächen 19 gleichmäßig in Richtung r1 gegen die Außenfläche 27 der Tragstange 13a (siehe Fig. 8).

In jeder Position der Tragstange 13a relativ zu den Armen 21 werden die Kontaktflächen 19 an der Außenfläche 27 gehalten, so dass die Kopfstütze 11 klapperfrei gelagert ist. Die Tragstange 13a wird nicht in eine bestimmte Richtung an den Rahmen 16 bzw. an die Führungsstruktur gedrückt. Sie ist schwimmend in der Öffnung 17 gelagert.

Der Innendurchmesser I ist gemäß Fig. 6 der Durchmesser eines Kreises um den Mittelpunkt M, der die Kontaktflächen 19 tangiert. Wird die Tragstange 13a montiert, weist der Außendurchmesser D der Tragstange 13a (siehe Fig. 8) bezüglich des Innendurchmessers I (siehe Fig. 6) ein Übermaß auf. Die Arme 21 sind aus diesem Grunde in Richtung r2 verformt, wodurch die Kontaktfläche 19 aufgrund der elastischen Rückstellkraft des Arms 21 in Richtung r1 an eine Außenfläche 27 der Tragstange 13a gedrückt wird.

Eine Längsmittelachse a2 der Tragstange 13a fällt im Ausführungsbeispiel mit der Längsmittelachse a1 zusammen. Auch in dem Fall, dass die Längsmittelachse a2 einen Abstand zu der Längsmittelachse a1 aufweist, die Tragstange 13a also nicht zentrisch in der Öffnung 17 angeordnet ist, werden die Kontaktflächen 19 an der Außenfläche 27 gehalten.

Nicht nur bei toleranzbedingter Abweichung der Sollposition der Tragstangen 13a liegt die Kontaktfläche 19 an der Außenfläche 27 an und verhindert das Klappern der Kopfstütze 11. Das Kopfanlageteil 12 ist auch bei Abweichungen in Bezug auf die Tragstangenform oder Abweichungen des Soll-Abstandes zwischen den Tragstangen 13a und 13b sicher auf den Tragstangen 13a und 13b gelagert. Darüber hinaus ruft die Lagervorrichtung 10 eine Reibkraft hervor, die der Bewegung des Kopfanlageteils 12 in Richtung z1 und z2 entgegenwirkt.

In den Fig. 8 und 9 sind Schnittansichten des Einsatzes 38 gezeigt, der in dem Lagersitz 33 zur Lagerung der Tragstange 13a vorgesehen ist. Die zu diesem Einsatz 38 gemachten Ausführungen gelten in gleicher Weise für alle anderen Einsätze 38, d.h. für den in dem Lagersitz 34 der Führungsstruktur 32a befindlichen Einsatz 38, die in die den Lagersitzen 33 und 34 der Führungsstruktur 32b befindlichen Einsätze.

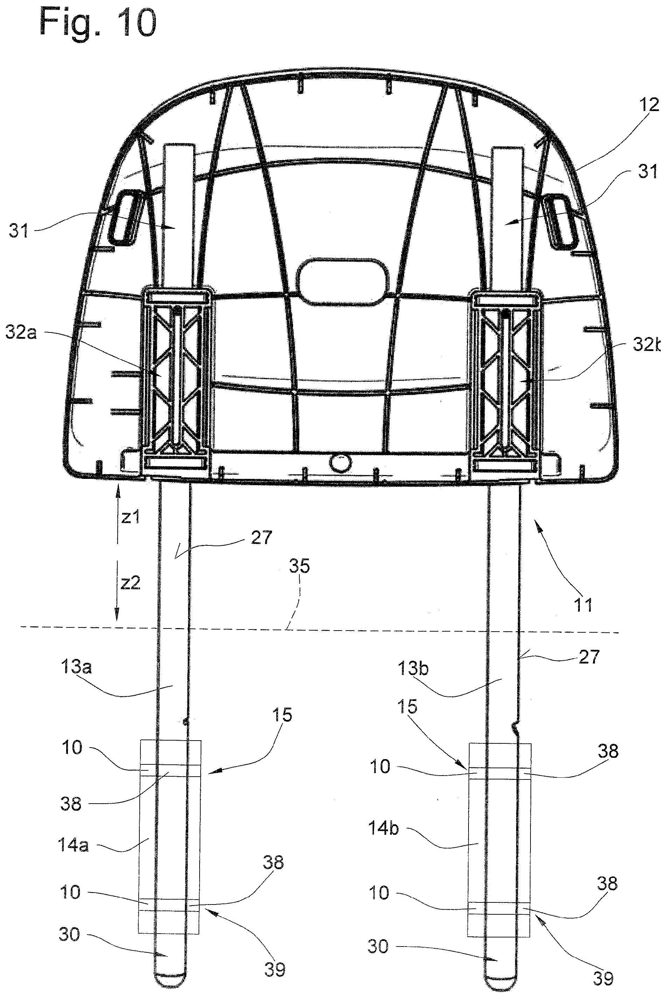

Gemäß einer alternativen, in Fig. 10 dargestellten Ausführungsform sind die Tragstangen 13a und 13b fest mit dem Kopfanlageteil 12 verbunden, z.B. verrastet. Das Kopfanlageteil 12 ist in die Richtungen z1, z2 unbewegbar. Die Tragstangen 13a und 13b sind relativ zu den Führungsstrukturen 14a und 14b in die Richtungen z1, z2 bewegbar. Jede Führungsstruktur 14a und 14b weist einen oberen Lagersitz 15 und einen unteren Lagersitz 39 auf. In jedem Lagersitz 15 und 39 ist ein Einsatz 38 mit der Lagervorrichtung 10 angeordnet.

## Patentansprüche

1. Lagervorrichtung für eine Tragstange (13a, 13b) einer Kopfstütze (11) für Fahrzeugsitze, mit wenigstens einem Rahmen (16), welcher eine Öffnung (17) ausbildet, die von der Tragstange (13a, 13b) durchgriffen werden kann, wobei der Rahmen (16) die Öffnung (17) wenigstens teilweise umgreift, wobei die Lagervorrichtung (10) für eine schwimmende Lagerung an der Tragstange (13a, 13b) wenigstens zwei Kontaktbereiche (18) zur Anlage an der Außenfläche (27) der Tragstange (13a, 13b) aufweist, der mit einem Verbindungselement mit einem Haltebereich (28) verbunden ist, welcher an dem Rahmen (16) ausgebildet ist, **dadurch gekennzeichnet, dass** eine Innenfläche (40) der Öffnung (17) in einer ersten Ebene (E1) einen Anschlag für die Tragstange (13a, 13b) bildet und dass der wenigstens eine Kontaktbereich (18) in einer zweiten Ebene (E2) angeordnet ist, die einen Abstand (I2) zu der ersten Ebene (E1) aufweist, derart, dass die Kontaktbereiche (18) in Bezug auf eine Längsmittelachse (a1) der Lagervorrichtung (10) von der Innenfläche (40) beabstandet sind.

2. Lagervorrichtung nach Anspruch 1, **dadurch gekennzeichnet, dass** das Verbindungselement von einem Arm (21) gebildet ist, welchem der Kontaktbereich (18) zugeordnet ist.

3. Lagervorrichtung nach Anspruch 2, **dadurch gekennzeichnet, dass** der Arm (21) elastisch verformbar ausgebildet ist.

4. Lagervorrichtung nach Anspruch 2 oder 3, **dadurch gekennzeichnet, dass** sich der Arm (21) in Umfangsrichtung (u) um die Öffnung (17) erstreckt und eine Laibung (22) der Öffnung (17) wenigstens teilweise ausbildet.

5. Lagervorrichtung nach einem der vorangehenden Ansprüche, **dadurch gekennzeichnet, dass** eine Feder (26) auf den Kontaktbereich (18) wirkt und den Kontaktbereich (18) radial in Richtung (r1) der Öffnung (17) belastet.

6. Lagervorrichtung nach Anspruch 5, **dadurch gekennzeichnet, dass** die Feder (26) als Ringfeder ausgebildet ist, welche die Öffnung (17) wenigstens teilweise umschließt.

7. Lagervorrichtung nach Anspruch 5 oder 6, **dadurch gekennzeichnet, dass** die Feder (26) den Kontaktbereich und / oder das Verbindungselement wenigstens teilweise umgreift.

8. Lagervorrichtung nach einem der Ansprüche 5 bis 7, **dadurch gekennzeichnet, dass** die Feder (26) wenigstens zwei Kontaktbereiche (18) derart belastet, dass die innerhalb der Öffnung (17) zentriert werden kann.

9. Lagervorrichtung nach einem der vorangehenden Ansprüche, **dadurch gekennzeichnet, dass** der Rahmen (16) Teil einer Führungsstruktur ist oder als Einsatz (38) ausgebildet ist, welcher an der Führungsstruktur (14a, 14b, 32a, 32b) befestigbar ist.

10. Lagervorrichtung nach einem der vorangehenden Ansprüche, **dadurch gekennzeichnet, dass** der Rahmen (16) plattenförmig ausgebildet ist.

11. Lagervorrichtung nach einem der vorangehenden Ansprüche, **dadurch gekennzeichnet, dass** der plattenförmige Rahmen (16) die erste Ebene (E1) bildet und dass das wenigstens eine Verbindungselement (21) derart an dem Rahmen (16) angeformt ist, dass der mindestens eine Kontaktbereich (18) eine zweite Ebene (E2) bildet.

12. Lagervorrichtung nach einem der vorangehenden Ansprüche, **dadurch gekennzeichnet, dass** der Rahmen (16) mit dem wenigstens einen Verbindungselement (21) einteilig ausgebildet ist.

13. Kopfstütze (11) mit einer Lagervorrichtung (10) gemäß einem der vorhergehenden Ansprüche, mit einem Kopfanlageteil (12), welches mittels wenigstens einer Tragstange (13a, 13b) an einem Fahrzeugsitz lagerbar ist, wobei der Rahmen (16) einer Führungsstruktur (14a, 14b, 32a, 32b) zugeordnet ist, die dem Kopfanlageteil (12) zugeordnet ist oder an einem Fahrzeugsitz befestigbar ist.

## Claims

1. Bearing device for a support rod (13a, 13b) of a head support (11) for vehicle seats, having at least one frame (16), which forms an opening (17) that can be penetrated by the support rod (13a, 13b), wherein the frame (16) at least partially engages around the opening (17), wherein the bearing device (10) has at least two contact regions (18) for contact on the outer surface (27) of the support rod (13a, 13b) for a floating bearing arrangement on the support rod (13a, 13b), said system being connected to a connecting element having a holding region (28), which is configured on the frame (16), **characterised in that** an inner surface (40) of the opening (17) forms an abutment for the support rod (13a, 13b) in a first plane (E1) and the at least one contact region (18) is arranged in a second plane (E2), which has a distance (12) to the first plane (E1), in such a way that the contact regions (18) are spaced apart from the inner surface (40) in relation to a central longitudinal axis (a1) of the bearing device (10).

2. Bearing device according to claim 1, **characterised in that** the connecting element is formed by an arm (21), which is assigned to the contact region (18).

3. Bearing device according to claim 2, **characterised in that** the arm (21) is designed to be elastically deformable.

4. Bearing device according to claim 2 or 3, **characterised in that** the arm (21) extends in the circumferential direction (u) around the opening (17) and at least partially forms a soffit (22) of the opening (17).

5. Bearing device according to one of the preceding claims, **characterised in that** a spring (26) acts on the contact region (18) and the contact region (18) loads radially in the direction (r1) of the opening (17).

6. Bearing device according to claim 5, **characterised in that** the spring (26) is designed as a ring spring, which at least partially encloses the opening (17).

7. Bearing device according to claim 5 or 6, **characterised in that** the spring (26) at least partially engages around the contact region and/or the connecting element.

8. Bearing device according to one of claims 5 to 7, **characterised in that** the spring (26) loads at least two contact regions (18) in such a way that the inside of the opening (17) can be centred.

9. Bearing device according to one of the preceding claims, **characterised in that** the frame (16) is part of a guide structure or is designed as an insert (38), which can be fixed to the guide structure (14a, 14b, 32a, 32b).

10. Bearing device according to one of the preceding claims, **characterised in that** the frame (16) is designed to be plate-shape.

11. Bearing device according to one of the preceding claims, **characterised in that** the plate-shaped frame (16) forms the first plane (E1) and the at least one connecting element (21) is moulded on the frame (16) in such a way that the at least one contact region (18) forms a second plane (E2).

12. Bearing device according to one of the preceding claims, **characterised in that** the frame (16) is designed in one piece with the at least one connecting element (21).

13. Head support (11) having a bearing device (10) according to one of the preceding claims, having a head contact part (12), which can be mounted on a vehicle seat by means of at least one support rod (13a, 13b), wherein the frame (16) is assigned to a guide structure (14a, 14b, 32a, 32b), which is assigned to the head contact part (12) or can be fixed on a vehicle seat.

## Revendications

1. Dispositif de palier pour une tige de support (13a, 13b) d'un appuie-tête (11) pour sièges de véhicule, comprenant au moins un cadre (16), lequel forme une ouverture (17) qui peut être traversée par la tige de support (13a, 13b), dans lequel le cadre (16) entourant au moins partiellement l'ouverture (17), dans lequel le dispositif de palier (10) présente, pour une pose flottante sur la tige de support (13a, 13b), au moins deux zones de contact (18) qui viennent en appui sur la surface extérieure (27) de la tige de support (13a, 13b) pour être reliées à un élément de liaison comprenant une zone de retenue (28) qui est formée sur le cadre (16), **caractérisé en ce qu'**une surface intérieure (40) de l'ouverture (17) forme, dans un premier plan (E1), une butée pour la tige de support (13a, 13b) et **en ce que** l'au moins une zone de contact (18) est disposée dans un second plan (E2) qui est à une distance (12) du premier plan (E1) de telle sorte que les zones de contact (18) soient distantes de la surface intérieure (40) par rapport à un axe moyen longitudinal (a1) du dispositif de palier (10).

2. Dispositif de palier selon la revendication 1, **caractérisé en ce que** l'élément de liaison est formé par un bras (21) auquel est associée la zone de contact (18).

3. Dispositif de palier selon la revendication 2, **caractérisé en ce que** le bras (21) est conçu pour être élastiquement déformable.

4. Dispositif de palier selon la revendication 2 ou 3, **caractérisé en ce que** le bras (21) s'étend dans la direction circonférentielle (u) autour de l'ouverture (17) et forme au moins partiellement un montant (22) de l'ouverture (17).

5. Dispositif de palier selon l'une des revendications précédentes, **caractérisé en ce qu'**un ressort (26) agit sur la zone de contact (18) et sollicite la zone de contact (18) radialement dans la direction (r1) de l'ouverture (17).

6. Dispositif de palier selon la revendication 5, **caractérisé en ce que** le ressort (26) est conçu sous la forme d'un ressort annulaire qui enserre au moins partiellement l'ouverture (17).

7. Dispositif de palier selon la revendication 5 ou 6, **caractérisé en ce que** le ressort (26) enserre au moins partiellement la zone de contact et / ou l'élément de liaison.

8. Dispositif de palier selon l'une des revendications 5 à 7, **caractérisé en ce que** le ressort (26) sollicite au moins deux zones de contact (18) de telle sorte qu'il puisse être centré à l'intérieur de l'ouverture (17).

9. Dispositif de palier selon l'une des revendications précédentes, **caractérisé en ce que** le cadre (16) fait partie d'une structure de guidage ou est conçu sous la forme d'un insert (38) qui peut être fixé à la structure de guidage (14a, 14b, 32a, 32b).

10. Dispositif de palier selon l'une des revendications précédentes, **caractérisé en ce que** le cadre (16) est conçu en forme de plaque.

11. Dispositif de palier selon l'une des revendications précédentes, **caractérisé en ce que** le cadre en forme de plaque (16) forme le premier plan (E1) et **en ce que** l'au moins un élément de liaison (21) est façonné sur le cadre (16) de telle sorte que l'au moins une zone de contact (18) forme un second plan (E2).

12. Dispositif de palier selon l'une des revendications précédentes, **caractérisé en ce que** le cadre (16) est formé d'un seul tenant avec l'au moins un élément de liaison (21).

13. Appuie-tête (11) avec un dispositif de palier (10) selon l'une des revendications précédentes, comprenant une partie de repose-tête (12) qui peut être montée sur un siège de véhicule à l'aide d'au moins une tige de support (13a, 13b), dans lequel le cadre (16) est associé à une structure de guidage (14a, 14b, 32a, 32b) qui est associée à la partie de repose-tête (12) ou peut être fixée à un siège de véhicule.
